Europäisches Patentamt

(19) European Patent Office

Office européen des brevets

(11) Numéro de publication: **0 251 955**
**B1**

(12) **FASCICULE DE BREVET EUROPEEN**

(45) Date de publication du fascicule du brevet:
02.05.90

(21) Numéro de dépôt: 87420189.0

(22) Date de dépôt: 02.07.87

(51) Int. Cl.⁴: **C23G 1/02**, C11D 7/26,
C02F 5/08, C02F 5/10

(54) Compositions acides à hautes concentrations en matières actives pour le traitement des eaux et/ou le nettoyage des installations les contenant.

(30) Priorité: 03.07.86 FR 8609865

(43) Date de publication de la demande:
07.01.88 Bulletin 88/1

(45) Mention de la délivrance du brevet:
02.05.90 Bulletin 90/18

(84) Etats contractants désignés:
BE DE GB IT

(56) Documents cités:
EP-A- 0 079 165
FR-A- 1 533 473
GB-A- 2 054 548
US-A- 3 704 750
US-A- 4 209 398

(73) Titulaire: Société COATEX, Société Anonyme, 35 Cours
Aristide Briand, F-69300 Caluire(FR)

(72) Inventeur: Rousset, Jacky, Baneins, F-01990 St
Trivier-sur-Moignans(FR)
Inventeur: Moro, Jean, 132, Rue de la République
Bâtiment E - Allée B, F-69120 Vaulx-en-Velin(FR)

(74) Mandataire: Gaucherand, Michel, COATEX Département
Propriété Industrielle 35, Cours Aristide Briand,
F-69300 Caluire(FR)

ACTORUM AG

**Description**

L'invention concerne des compositions acides à hautes teneurs en matières actives pour le traitement des eaux et/ou le détartrage des installations , comprenant au moins un polymère carboxylique hydrosoluble, au moins un acide fort essentiellement d'origine minérale, éventuellement au moins un sel métallique de cation bivalent et éventuellement des agents spécifiques tels que des inhibiteurs de corrosion, des agents biocides, des parfums...

Depuis longtemps déjà est apparue à l'homme de l'art la nécessité de traiter les eaux destinées à alimenter des installations industrielles et/ou domestiques ou devant être rejetées sous forme d'effluents aqueux.

Dans le cas où les eaux naturelles et/ou milieux aqueux sont destinés à des emplois industriels ou domestiques, ils contiennent en général certains métaux alcalino-terreux, solubilisés sous forme saline, tels que le calcium et le magnésium. Les composés de ces métaux ont la propriété d'être insolubilisés et de se déposer sous forme d'incrustations minérales sur les surfaces des installations industrielles ou domestiques les contenant, telles que les échangeurs thermiques pour le chauffage (chaudières de production d'eau chaude ou de vapeur d'eau), les échangeurs thermiques de refroidissement, les turbines à vapeur, les pompes et les condenseurs de vapeur, les évaporateurs, les conditionnements d'air, les circuits de chauffage des logements individuels ou collectifs, les installations sanitaires en faïence émaillée.

Dès lors, il s'est révélé nécessaire d'empêcher ou de réduire à l'extrême la formation des incrustations minérales sur les surfaces des installations industrielles ou domestiques (en contact avec l'eau) trop souvent préjudiciable, par exemple, à la capacité d'échanges thermiques des surfaces des échangeurs ou encore à la vitesse d'écoulement des fluides afin d'éviter ou au moins limiter les risques d'occlusion des installations et les conserver dans un état de bon fonctionnement.

C'est pourquoi l'homme de l'art a déjà proposé des compositions aqueuses pour le traitement des eaux contenant en faible concentration divers agents actifs bien connus, tels que les copolymères carboxyliques de bas poids moléculaire ralentissant la formation des tartres résultant de la présence dans l'eau d'ions alcalino-terreux et dispersant les particules d'argiles, de tartre, d'oxydes métalliques présentes, mais aussi des acides assurant la régulation du pH et favorisant la dissolution du tartre formé, et enfin des inhibiteurs de corrosion, par exemple l'acide phosphorique, le benzotriazole, destinés à protéger les surfaces métalliques des installations.

A ce titre, il a déjà été décrit (FR 2 231 778) un procédé pour inhiber la corrosion des métaux dans un milieu aqueux consistant à maintenir dans ledit milieu une concentration d'au moins 5 ppm d'une composition composée de zinc et d'au moins un polymère de poids moléculaire compris entre 500 et 10 000 choisi dans le groupe constitué par le polyacrylamide, l'acide polyacrylique et le polyacrylate de sodium.

"D'une manière équivalente, pour empêcher la formation de tartre, il a été mentionné (US 3 704 750) un procédé qui consiste à mettre en œuvre dans le milieu concerné une solution aqueuse d'un acide fort (acide minéral) et d'un inhibiteur formé d'un mélange d'au moins un acide polyacrylique et d'un polyacrylamide partiellement hydrolysé, les fonctions carboxyliques étant salifiées par un agent de salification choisi dans le groupe constitué par les alcalino-terreux, le cuivre, le zinc, le plomb, le fer et l'aluminium."

Dans le même esprit mais pour le détartrage et/ou le nettoyage des installations sanitaires en faïence émaillée, il a été proposé (FR 2 469 450) des compositions de traitement contenant des acides polyacryliques hydrosolubles, des acides organiques tels que acides acétique, citrique, lactique, un agent inhibiteur de corrosion, et enfin des additifs tels que parfums, colorants et biocides.

De même, pour limiter la formation de tartre et lutter contre les phénomènes de corrosion des installations industrielles et/ou domestiques à caractère métallique, il a été indiqué (FR 2 231 777) d'utiliser (à raison d'au moins 10 ppm) une composition comprenant au moins un polymère hydrosoluble de poids moléculaire compris entre 500 et 10 000 et au moins un agent inhibant la corrosion tel que l'acide phosphorique, le benzotriazole, le mercaptobenzothiazole ainsi qu'un sel de zinc.

Or, toutes les compositions acides ainsi préconisées pour le traitement des eaux ont en commun un même inconvénient majeur qui impose à l'homme de métier leur préparation et leur mise en oeuvre à faible concentration. Car, en raison d'une certaine incompatibilité entre le polymère hydrosoluble de bas poids moléculaire et les autres agents intervenant dans les compositions destinées au traitement des eaux, il se produit, dès lors que l'on réalise des compositions à concentration élevée en agents actifs, un déséquilibre qui se manifeste par une précipitation rendant lesdites compositions impropres à l'usage auquel elles étaient destinées.

Ainsi, comme il s'est révélé impossible à l'usage de préparer des compositions acides à haute teneur en matières actives pour le traitement des eaux sans provoquer la précipitation au moins partielle de ces matières actives, l'homme de métier a souvent pratiqué et pratique encore, ou bien l'injection simultanée de solutions concentrées en diverses matières actives, incompatibles entre elles à ces concentrations, ou encore la préparation et la mise en oeuvre d'une solution aqueuse diluée, c'est-à-dire à faible concentration en matières actives, la première méthode présentant plus d'inconvénients que la deuxième pour l'utilisateur en raison des erreurs possibles sur les concentrations en matières actives des solutions injectées et les réglages des vitesses d'injection desdites solutions.

Depuis lors, la Demanderesse a montré (FR 2 544 722), dans des compositions améliorées pour le traitement des eaux contenant un polymère carboxylique et un sel de zinc, l'intérêt de remplacer le polymère d'acide acrylique par un terpolymère d'acides acrylique, méthacrylique et itaconique de poids moléculaire sensiblement équivalent. Mais il a été constaté à l'usage que ces terpolymères étaient encore mal adaptés à la préparation de compositions acides à hautes teneurs en matières actives destinées au traitement des eaux telles que par exemple celles contenant en hautes concentrations ledit terpolymère, un sel de zinc et un acide fort comme l'acide phosphorique ou les acides phosphoniques et, en outre, d'autres agents spécifiques parce qu'ils précipitent lorsqu'ils sont incorporés dans un milieu hautement concentré en acide fort.

Devant la nécessité économique et l'exigence technique de disposer de compositions acides à hautes concentrations en matières actives destinées au traitement des eaux industrielles ou domestiques et au nettoyage des installations industrielles ou sanitaires correspondantes, la Demanderesse, poursuivant ses recherches, a trouvé et mis au point de telles compositions.

Selon l'invention, les compositions acides à hautes concentrations en matières actives comprenant au moins un polymère carboxylique, au moins un acide fort, éventuellement au moins un sel d'un métal divalent ainsi qu'éventuellement des agents spécifiques connus, se caractérisent en ce que lesdites compositions comprennent :

a) de 10 à 60 pour cent en poids exprimés sous forme anhydre d'un polymère carboxylique hydrosoluble sous sa forme acide contenant au moins 5% en poids et préférentiellement au moins 10% en poids d'acide itaconique,

b) de 10 à 80 pour cent en poids exprimés sous forme anhydre d'au moins un acide fort,

c) de 0 à 15 pour cent en poids exprimés sous forme anhydre de l'élément zinc sous forme d'ions $Zn^{2+}$,

d) de 0 à 10 pour cent en poids exprimés sous forme anhydre d'agents spécifiques,

e) de 0 à 65 pour cent en poids d'eau.

Les polymères carboxyliques hydrosolubles entrant dans les compositions acides selon l'invention sont formés d'acide acrylique et de 5 à 90 pour cent en poids mais de préférence de 10 à 60 pour cent en poids d'acide itaconique.

Selon une variante, les polymères carboxyliques hydrosolubles peuvent contenir une faible teneur en acide méthacrylique. Dans ce cas, lesdits polymères peuvent contenir de 0,05 à 10 pour cent en poids mais préférentiellement de 0,1 à 5 pour cent en poids d'acide méthacrylique, de 10 à 95 pour cent en poids mais de préférence de 60 à 90 pour cent en poids d'acide acrylique, et de 5 à 90 pour cent en poids mais de préférence de 10 à 60 pour cent en poids d'acide itaconique.

Ces polymères carboxyliques sont préparés selon les procédés connus en milieu aqueux et/ou solvants (tels que les alcools) par copolymérisation radicalaire des acides acrylique, itaconique et éventuellement méthacrylique en présence de régulateurs de polymérisation tels que par exemple des composés organiques à base d'hydroxylamine, les mercaptans, l'acide thioglycolique, et en présence d'initiateurs de polymérisation connus tels que les péroxydes et les persels, par exemple l'eau oxygénée, le persulfate, etc... puis en opérant éventuellement une neutralisation complète ou partielle du polymérisat.

Dès la fin de la polymérisation et après avoir éliminé le solvant alcoolique quand il a été utilisé, la solution aqueuse du polymérisat obtenu peut être mise en oeuvre préférentiellement sous forme acide ou être éventuellement neutralisée partiellement ou en totalité par au moins un agent approprié de neutralisation disposant d'une fonction monovalente ou d'une fonction polyvalente.

La solution aqueuse du polymérisat peut également être traitée par tout moyen connu de l'homme de l'art pour en éliminer la phase liquide et isoler les copolymères carboxyliques sous la forme d'une fine poudre qui peut être utilisée sous cet autre aspect.

Les polymères carboxyliques hydrosolubles entrant dans les compositions selon l'invention sont ceux dont les sels de sodium ont une viscosité spécifique comprise entre 0,25 et 2 et préférentiellement entre 0,30 et 0,80.

La détermination de la viscosité spécifique desdits polymères, symbolisée par la lettre grecque $\eta_{sp\acute{e}}$, peut être réalisée de la manière suivante :

On prépare une solution de polymère sous forme de sel sodique par dissolution de 50 g sec du terpolymère dans un litre d'une solution d'eau distillée contenant 60 g de chlorure de sodium. Puis on mesure, avec un viscosimètre capillaire placé dans un bain thermostaté à 25° C, le temps d'écoulement d'un volume donné de la solution précitée contenant le terpolymère acrylique alcalin, ainsi que le temps d'écoulement du même volume de solution aqueuse de chlorure de sodium dépourvue dudit terpolymère. Il est alors possible de définir la viscosité spécifique $\eta_{sp\acute{e}}$ grâce à la relation suivante :

EP 0 251 955 B1

$$\eta_{sp\acute{e}} = \frac{(\text{temps d'écoulement de la solution de polymère}) - (\text{temps d'écoulement de la solution NaCl})}{(\text{temps d'écoulement de la solution NaCl})}$$

Le tube capillaire est généralement choisi de telle manière que le temps d'écoulement de la solution de NaCl dépourvue de terpolymère soit d'environ 90 à 100 secondes, donnant ainsi des mesures de viscosité spécifique d'une très bonne précision.

Quant à l'acide fort intervenant dans les compositions selon l'invention, il peut être choisi parmi les acides phosphorique, phosphoniques, chlorhydrique, sulfurique, sulfamique, mais préférentiellement parmi les acides phosphorique et chlorhydrique.

Le zinc intervenant éventuellement dans les compositions acides selon l'invention peut être introduit sous la forme d'un sel zinc hydrosoluble tel que, préférentiellement chlorure, fluorure, sulfate, nitrate, phosphate ou acétate de zinc.

Les compositions acides selon l'invention peuvent également contenir des agents spécifiques bien connus, tels que des agents biocides, des parfums mais également des composés tels que le benzotriazole dans des quantités variables.

Préférentiellement, les compositions acides selon l'invention à hautes concentrations en matières actives destinées au traitement des eaux industrielles ou domestiques et au nettoyage des installations industrielles ou sanitaires correspondantes comprenant au moins un polymère carboxylique, au moins un acide fort, éventuellement un sel d'un métal divalent ainsi qu'éventuellement des agents spécifiques connus se caractérisent en ce que lesdites compositions comprennent :

a) de 10 à 35 pour cent en poids exprimés sous forme anhydre d'un polymère carboxylique hydrosoluble sous sa forme acide contenant au moins 5% en poids et préférentiellement au moins 10% en poids d'acide itaconique,
b) de 15 à 60 pour cent en poids exprimés sous forme anhydre d'au moins un acide fort,
c) de 2 à 8 pour cent en poids exprimés sous forme anhydre de l'élément zinc sous forme d'ions $Zn^{2+}$,
d) de 0,5 à 5 pour cent en poids exprimés sous forme anhydre d'agents spécifiques,
e) de 25 à 60 pour cent en poids d'eau.

Les compositions acides selon l'invention sont des solutions aqueuses limpides, homogènes et stables au cours d'un stockage prolongé. Elles inhibent de manière remarquable l'entartrage et la corrosion des métaux quand elles sont maintenues, dans le milieu aqueux concerné, à une concentration d'au moins 1 ppm exprimée sous forme anhydre, préférentiellement de 2 à 1 000 ppm selon l'agressivité du milieu à traiter. Mais les compositions acides selon l'invention peuvent être mises en oeuvre selon des concentrations plus élevées dans le nettoyage des installations sanitaires.

La portée et l'intérêt de l'invention seront mieux perçus grâce aux exemples suivants :

Exemple 1

On a préparé selon la technique connue de polymérisation radicalaire déjà évoquée des polymères carboxyliques aux différentes proportions d'acides acrylique, itaconique et éventuellement méthacrylique, ces polymères étant regroupés dans le tableau I sous les numéros 1 à 9.

Pour ce faire, et dans le but d'illustrer le procédé de polymérisation, on a préparé le polymère n° 5 en opérant selon le protocole ci-après, étant entendu que les autres polymères ont été préparés selon le même protocole en adaptant pour chacun d'entre eux le système constitué par les catalyseurs et les agents de transfert pour régler leur viscosité spécifique.

On a placé dans un autoclave les ingrédients suivants :

| | |
|---|---|
| – eau | 1268,00 kg |
| – acétate de cuivre | 1,20 kg |
| – acide acrylique à 90% | 6,40 kg |
| – isopropanol | 600,00 kg |

Ces ingrédients étaient chauffés à la température de 80° C-90° C.

Puis on a ajouté en un temps de 3 heures environ et en maintenant la température dans l'intervalle pré-

4

cité une charge constituée par :

| | |
|---|---|
| – eau | 1683,20 kg |
| – mélanges d'acides carboxyliques | 1630,00 kg |
| – hydrate d'hydrazine à 24% | 20,00 kg |

En même temps que la charge, on a également introduit un catalyseur de polymérisation constitué par :

| | |
|---|---|
| – eau | 362,20 kg |
| – eau oxygénée à 130 volumes | 362,30 kg |

Au terme de l'addition de la charge et du catalyseur, on a distillé à la température de 100° C l'isopropanol jusqu'à sa complète élimination.

Enfin, après avoir refroidi le milieu résultant à la température de 20° C, on a ajusté la solution contenant le copolymère jusqu'à une concentration finale de 50% en poids de matière sèche.

| N° POLYMERE | 1 | 2 | 3 | 4 | 5 | 6 | 7 | 8 | 9 |
|---|---|---|---|---|---|---|---|---|---|
| A.A. ou INV | A.A. | A.A. | INV | INV | INV | INV | INV | INV | INV |
| Acide acrylique | 100 | 45 | 95 | 85 | 75 | 61 | 60 | 50 | 66 |
| Acide itaconique | | 15 | 5 | 15 | 25 | 30 | 40 | 50 | 30 |
| Acide méthacrylique | | 40 | 0 | 0 | 0 | 9 | 0 | 0 | 4 |
| "$\eta$ spé" | 0,38 | 0,32 | 0,30 | 0,30 | 0,38 | 0,38 | 0,65 | 0,31 | 0,42 |

A.A. = Art Antérieur
INV = Invention

## Exemple 2

Cet exemple a pour but de montrer le bon comportement des polymères mis en oeuvre selon l'invention lorsqu'on on prépare des compositions acides contenant des concentrations élevées desdits polymères avec de l'acide phosphorique concentré.

Les essais réalisés à cette intention l'ont été par comparaison avec les polymères appartenant à l'art antérieur.

Pour ce faire, on a mélangé les solutions de polymères carboxyliques à 50% avec de l'acide phosphorique à 75% dans les conditions suivantes :

a) **Composition**

| | |
|---|---|
| – solution de polymère à 50% | 50 grammes |
| – acide phosphorique à 75% | 50 grammes |

b) **Mode opératoire**

Le mélange est réalisé dans un bécher à température ambiante de 20° C à l'aide d'un agitateur magnétique. Le temps d'agitation est de 5 minutes.

Les résultats obtenus sont résumés dans le tableau II ci-après.

## TABLEAU II

| | POLYMERE TABLEAU 1 | | ASPECT DU MELANGE | | |
|---|---|---|---|---|---|
| | N° | A.A. ou INV | IMMEDIAT | APRES 24 HEURES | APRES 1 MOIS |
| Essai 1 | 1 | A.A. | trouble et visqueux | trouble et visqueux | trouble, séparation en 2 phases |
| Essai 2 | 2 | A.A. | trouble | trouble, visqueux 2 phases | trouble, visqueux, 2 phases |
| Essai 3 | 3 | INV | limpide | trouble | trouble, séparation en 2 phases |
| Essai 4 | 4 | INV | limpide | trouble | trouble et séparé en 2 phases |
| Essai 5 | 5 | INV | limpide | limpide | limpide |
| Essai 6 | 6 | INV | limpide | limpide | léger trouble |
| Essai 7 | 7 | INV | limpide | limpide | limpide |
| Essai 8 | 8 | INV | limpide | limpide | limpide |
| Essai 9 | 9 | INV | limpide | limpide | limpide |

Les essais 1 et 2 montrent que les polymères selon l'art antérieur présentent après addition d'acide phosphorique une évolution de leur état physique qui rend impossible l'utilisation de la composition.

Par contre, les essais 3 à 9 font apparaître le bon comportement des compositions selon l'invention contenant lesdits polymères et l'acide phosphorique, compositions qui restent limpides pendant quelques heures ou plus d'un mois selon le rapport des monomères.

<u>Exemple 3</u>

Cet exemple se propose de montrer le bon comportement des polymères selon l'invention lorsqu'on les utilise dans des compositions acides complexes selon l'invention contenant du chlorure de zinc, de l'acide phosphorique et du benzotriazole.

Pour ce faire, on a préparé des mélanges dans les conditions suivantes :

a) **Composition**

| | |
|---|---|
| — solution aqueuse de polymère à 50% | 41,68 grammes |
| — $ZnCl_2$ en solution aqueuse à 55% | 13,34 grammes |
| — eau | 19,58 grammes |
| — benzotriazole | 0,40 gramme |
| — acide phosphorique à 75% | 25,00 grammes |

b) **Mode opératoire**

Dans un bécher muni d'une agitation magnétique, on verse d'abord la solution de polymère à 50% puis on ajoute la solution de chlorure de zinc à 55%, l'eau et enfin l'acide phosphorique dans lequel on a au préalable dissous le benzotriazole.

On opère à température ambiante de 20° C en 5 minutes.
Les résultats obtenus sont résumés dans le tableau III ci-après.

TABLEAU III

| | POLYMERE TABLEAU 1 | | ASPECT DU MELANGE | | |
|---|---|---|---|---|---|
| | N° | A.A. ou INV | IMMEDIAT | APRES 24 HEURES | APRES 1 MOIS |
| Essai10 | 1 | A.A. | opalescent | trouble | 2 phases |
| Essai 11 | 2 | A.A. | trouble | 2 phases | 2 phases |
| Essai 12 | 5 | INV | limpide | limpide | limpide, formation d'1 très petit dépôt presque imperceptible |

Là encore, l'essai 12 montre bien le bon comportement de la composition acide selon l'invention par rapport aux compositions selon l'art antérieur qui sont troubles et inutilisables.

Exemple 4

Cet exemple proche de l'exemple 3 a pour but de montrer la polyvalence des compositions acides selon l'invention quand on remplace l'acide phosphorique par un autre acide, par exemple l'acide chlorhydrique.
Pour cela, on a préparé des mélanges dans les conditions suivantes :
a) **Composition**

| | |
|---|---|
| – solution aqueuse de polymère à 50% | 50,00 grammes |
| – ZnCl$_2$ en solution aqueuse à 55% | 13,34 grammes |
| – benzotriazole | 2,00 grammes |
| – acide chlorhydrique à 35% | 34,66 grammes |

b) **Mode opératoire**
Dans un bécher muni d'une agitation magnétique, on verse d'abord la solution de polymère à 50% puis on ajoute la solution de chlorure de zinc à 55%, enfin l'acide chlorhydrique dans lequel on a au préalable dissous le benzotriazole.
On opère en 5 minutes à température ambiante de 20° C.
Les résultats obtenus sont réunis dans le tableau IV ci-après.

TABLEAU IV

| | POLYMERE TABLEAU 1 | | ASPECT DU MELANGE | | |
|---|---|---|---|---|---|
| | N° | A.A. ou INV | IMMEDIAT | APRES 24 HEURES | APRES 1 MOIS |
| Essai 13 | 1 | A.A. | opalescent | trouble | séparation en 2 phases |
| Essai 14 | 5 | INV | limpide | limpide | limpide |

EP 0 251 955 B1

Ainsi, l'essai 14 confirme le bon comportement de la composition acide complexe selon l'invention fortement acidifiée par l'acide chlorhydrique, tandis que l'essai 13 réalisé avec une composition acide selon l'art antérieur est trouble et inutilisable.

## Revendications

1. Compositions acides à hautes concentrations en matières actives destinées au traitement des eaux industrielles ou domestiques et au nettoyage des installations industrielles ou sanitaires correspondantes, comprenant des matières polymères carboxyliques, un acide fort, éventuellement un sel d'un métal divalent ainsi qu'éventuellement des agents spécifiques connus, caractérisées en ce que lesdites compositions acides comprennent :
   a) de 10 à 60 pour cent en poids exprimés sous forme anhydre d'un polymère carboxylique hydrosoluble sous sa forme acide contenant au moins 5% en poids et préférentiellement au moins 10% en poids d'acide itaconique,
   b) de 10 à 80 pour cent en poids exprimés sous forme anhydre d'au moins un acide fort,
   c) de 0 à 15 pour cent en poids exprimés sous forme anhydre de l'élément zinc sous forme d'ions $Zn^{2+}$,
   d) de 0 à 10 pour cent en poids exprimés sous forme anhydre d'agents spécifiques,
   e) de 0 à 65 pour cent en poids d'eau.

2. Compositions acides à hautes concentrations en matières actives selon la revendication 1, caractérisées en ce que lesdites compositions comprennent:
   a) de 10 à 35 pour cent en poids exprimés sous forme anhydre d'un polymère carboxylique hydrosoluble sous sa forme acide contenant au moins 5% en poids et préférentiellement au moins 10% en poids d'acide itaconique,
   b) de 15 à 60 pour cent en poids exprimés sous forme anhydre d'au moins un acide fort,
   c) de 2 à 8 pour cent en poids exprimés sous forme anhydre de l'élément zinc sous forme d'ions $Zn^{2+}$,
   d) de 0,5 à pour 5 pour cent en poids exprimés sous forme anhydre d'agents spécifiques,
   e) de 25 à 60 pour cent en poids d'eau.

3. Compositions acides à hautes concentrations en matières actives selon l'une des revendications 1 ou 2, caractérisées en ce que le polymère carboxylique hydrosoluble est formé d'acide acrylique et de 5 à 90 pour cent en poids, mais de préférence de 10 à 60 pour cent en poids d'acide itaconique.

4. Compositions acides à hautes concentrations en matières actives selon l'une des revendications 1 ou 2, caractérisées en ce que le polymère carboxylique hydrosoluble est formé à partir de 0,05 à 10 pour cent en poids mais préférentiellement de 0,1 à 5 pour cent en poids d'acide méthacrylique, de 10 à 95 pour cent en poids mais de préférence de 60 à 90 pour cent en poids d'acide acrylique, et de 5 à 90 pour cent en poids mais de préférence de 10 à 60 pour cent en poids d'acide itaconique.

5. Compositions acides à hautes concentrations en matières actives selon l'une quelconque des revendications 1 à 4, caractérisées en ce que le polymère carboxylique hydrosoluble est partiellement neutralisé.

6. Compositions acides à hautes concentrations en matières actives selon l'une quelconque des revendications 1 à 5, caractérisées en ce que le polymère carboxylique hydrosoluble présente une viscosité spécifique (sous forme de sel de sodium) comprise entre 0,25 et 2 et préférentiellement entre 0,30 et 0,80.

7. Compositions acides à hautes concentrations en matières actives selon l'une quelconque des revendications 1 à 6, caractérisées en ce que l'acide fort est choisi parmi les acides phosphorique, phosphoniques, chlorhydrique, sulfurique, sulfamique.

8. Compositions acides à hautes concentrations en matières actives selon l'une quelconque des revendications 1 à 7, caractérisées en ce que l'élément zinc est introduit sous forme d'un sel hydrosoluble choisi dans le groupe constitué par les chlorure, fluorure, sulfate, nitrate, phosphate et acétate de zinc.

9. Compositions acides à hautes concentrations en matières actives selon l'une quelconque des revendications 1 à 8, caractérisées en ce que les agents spécifiques sont des agents biocides, des parfums, des inhibiteurs de corrosion tels que benzotriazole.

## Claims

1. Acid compositions having high concentrations of active ingredients intended for the treatment of water for industrial or domestic use and for the cleaning of the corresponding industrial or sanitary installations, comprising carboxylic polymeric materials, a strong acid, optionally a salt of a divalent metal as well as optionally specific known agents, characterised in that said acid compositions comprise:
   (a) from 10 to 60 per cent by weight, expressed in anhydrous form, of a water-soluble carboxylic polymer in its acidic form containing at least 5% by weight and preferably at least 10% by weight of itaconic acid,
   (b) from 10 to 80% by weight, expressed in anhydrous form, of at least one strong acid,
   (c) from 0 to 15 per cent by weight, expressed in anhydrous form, of the element zinc in the form of $Zn^{2+}$ ions,
   (d) from 0 to 10 per cent by weight, expressed in anhydrous form, of specific agents,

8

(e) from 0 to 65 per cent by weight of water.

2. Acid compositions having high concentrations of active ingredients according to claim 1, characterised in that said compositions comprise:

(a) from 10 to 35 per cent by weight, expressed in anhydrous form, of a water-soluble carboxylic polymer in its acidic form containing at least 5% by weight and preferably at least 10% by weight of itaconic acid,

(b) from 15 to 60 per cent by weight, expressed in anhydrous form, of at least one strong acid,

(c) from 2 to 8 per cent by weight, expressed in anhydrous form, of the element zinc in the form of $Zn^{2+}$ ions,

(d) from 0.5 to 5 per cent by weight, expressed in anhydrous form, of specific agents,

(e) from 25 to 60 per cent by weight of water.

3. Acid compositions having high concentrations of active ingredients according to one of claims 1 or 2, characterised in that the water-soluble carboxylic polymer is formed from acrylic acid and from 5 to 90 per cent by weight, but preferably 10 to 60 per cent by weight, of itaconic acid.

4. Acid compositions having high concentrations of active ingredients according to one of claims 1 or 2, characterised in that the water-soluble carboxylic polymer is formed from 0.05 to 10 per cent by weight, but preferably from 0.1 to 5 per cent by weight, of methacrylic acid, from 10 to 95 per cent by weight, but preferably from 60 to 90 per cent by weight, of acrylic acid, and from 5 to 90 per cent by weight, but preferably from 10 to 60 per cent by weight, of itaconic acid.

5. Acid compositions having high concentrations of active ingredients according to any one of claims 1 to 4, characterised in that the water-soluble carboxylic polymer is partially neutralised.

6. Acid compositions having high concentrations of active ingredients according to any one of claims 1 to 5, characterised in that the water-soluble carboxylic polymer has a specific viscosity (in the form of a sodium salt) of between 0.25 and 2 and preferably between 0.30 and 0.80.

7. Acid compositions having high concentrations of active ingredients according to any one of claims 1 to 6, characterised in that the strong acid is selected from phosphoric, phosphonic, hydrochloric, sulphuric and sulphamic acids.

8. Acid compositions having very high concentrations of active ingredients according to any one of claims 1 to 7, characterised in that the element zinc is introduced in the form of a water-soluble salt selected from the group constituted by zinc chloride, fluoride, sulphate, nitrate, phosphate and acetate.

9. Acid compositions having high concentrations of active ingredients according to any one of claims 1 to 8, characterised in that the specific agents are biocidal agents, scents and corrosion inhibitors such as benzotriazole.

**Patentansprüche**

1. Saure Zusammensetzungen mit hohen Wirkstoffkonzentrationen bestimmt für die Behandlung industrieller und häuslicher Brauchwasser und für die Reinigung der zugehörigen industriellen oder sanitären Anlagen, enthaltend polymere carboxylische Stoffe, eine starke Säure, gegebenenfalls ein Salz eines zweiwertigen Metalls sowie gegebenenfalls spezifische bekannte Agenzien, dadurch gekennzeichnet, daß diese sauren Zusammensetzungen enthalten:

a) 10 bis 60 Gew.% ausgedrückt in wasserfreier Form eines in Form seiner Säure wasserlöslichen carboxylischen Polymeren, das wenigstens 5 Gew.% und vorzugsweise wenigstens 10 Gew.% Itakonsäure enthält,

b) 10 bis 80 Gew.% ausgedrückt in wasserfreier Form wenigstens einer starken Säure,

c) 0 bis 15 Gew.% ausgedrückt in wasserfreier Form des Elements Zink in Form von $Zn^{2+}$-Ionen,

d) 0 bis 10 Gew.% ausgedrückt in wasserfreier Form spezifischer Agenzien,

e) 0 bis 65 Gew.% Wasser.

2. Saure Zusammensetzungen mit hohen Wirkstoffkonzentrationen gemäß Anspruch 1, dadurch gekennzeichnet, daß diese Zusammensetzungen enthalten:

a) 10 bis 35 Gew.% ausgedrückt in wasserfreier Form eines in Form seiner Säure wasssserlöslichen carboxylischen Polymeren enthaltend wenigstens 5 Gew.% und vorzugsweise wenigstens 10 Gew.% Itakonsäure,

b) 15 bis 60 Gew.% ausgedrückt in wasserfreier Form wenigstens einer starken Säure,

c) 2 bis 8 Gew.% ausgedrückt in wasserfreier Form des Elements Zink in Form von $Zn^{2+}$-Ionen,

d) 0, 5 bis 5 Gew.% ausgedrückt in wasserfreier Form spezifischer Agenzien,

e) 25 bis 60 Gew.% Wasser.

3. Saure Zusammensetzungen mit hohen Wirkstoffkonzentrationen gemäß einem der Ansprüche 1 oder 2, dadurch gekennzeichnet, daß das wasserlösliche carboxylische Polymere aus Acrylsäure und 5 bis 90 Gew.%, jedoch vorzugsweise 10 bis 60 Gew.% Itakonsäure gebildet ist.

4. Saure Zusammensetzungen mit hohen Wirkstoffkonzentrationen gemäß einem der Ansprüche 1 oder 2, dadurch gekennzeichnet, daß das wasserlösliche carboxylische Polymere ausgehend von 0,05 bis 10 Gew.% jedoch vorzugsweise 0,1 bis 5 Gew.% Methacrylsäure, 10 bis 95 Gew.% jedoch vorzugsweise 60 bis 90 Gew.% Acrylsäure und 5 bis 90 Gew.% jedoch vorzugsweise 10 bis 60 Gew.% Itakonsäure gebildet wird.

5. Saure Zusammensetzungen mit hohen Wirkstoffkonzentrationen gemäß einem der Ansprüche 1 bis 4, dadurch gekennzeichnet, daß das wasserlösliche carboxylische Polymere teilweise neutralisiert ist.

6. Saure Zusammensetzungen mit hohen Wirkstoffkonzentrationen gemäß einem der Ansprüche 1 bis 5, dadurch gekennzeichnet, daß das wasserlösliche carboxylische Polymere eine spezifische Viskosität (in Form des Natriumsalzes) zwischen 0,25 und 2 und vorzugsweise zwischen 0,30 und 0,80 aufweist.

7. Saure Zusammensetzungen mit hohen Wirkstoffkonzentrationen gemäß einem der Ansprüche 1 bis 6, dadurch gekennzeichnet, daß die starke Säure ausgewählt wird aus den Säuren Phosphorsäure, Phosphonsäuren, Chlorwasserstoffsäure, Schwefelsäure, Sulfaminsäure.

8. Saure Zusammensetzungen mit hohen Wirkstoffkonzentrationen gemäß einem der Ansprüche 1 bis 7, dadurch gekennzeichnet, daß das Element Zink in Form eines wasserlöslichen Salzes ausgewählt aus der Gruppe bestehend aus den Chloriden, Fluoriden, Sulfaten, Nitraten, Phosphaten und Acetaten des Zinks zugegeben wird.

9. Saure Zusammensetzungen mit hohen Wirkstoffkonzentrationen gemäß einem der Ansprüche 1 bis 8, dadurch gekennzeichnet, daß die spezifischen Agenzien biozide Agenzien, Duftstoffe oder Korrosionshemmer wie Benzotriazol sind.